# EUROPEAN PATENT SPECIFICATION

(11) **EP 1 832 040 B1**
(45) Date of publication and mention of the grant of the patent: **25.05.2011**
(21) Application number: 05825246.1
(22) Date of filing: 23.12.2005
(51) Int. Cl.: H04L 9/32

(54) **PUBLIC KEY INFRASTRUCTURES**
INFRASTRUKTUREN ÖFFENTLICHER SCHLÜSSEL
INFRASTRUCTURES À CLÉS PUBLIQUES

(30) Priority: 24.12.2004 GB 0428596
(43) Date of publication of application: 12.09.2007
(73) Proprietor: QINETIQ LIMITED, London SW1E 6PD (GB)
(72) Inventor: DEAN, Timothy Barry, Qinetiq LIMITED, Worcestershire WR14 3PS (GB)
(74) Representative: Tocher, Alastair James
(86) International application number: PCT/GB2005/005071
(87) International publication number: WO 2006/067503

(56) References cited:
- EP-A- 1 130 844
- US-A1- 2003 130 947
- US-B1- 6 192 130
- INFORMATION SYSTEMS APPLICATIONS AND TECHNOLOGY. ISAT 2003 SEMINAR 25-26 SEPT. 2003 SZKLARSKA POREBA, POLAND, 25 September 2003 (2003-09-25), pages 230-238, XP008061280 Information Systems Applications and Technology. ISAT 2003 Seminar Oficyny Wydawniczej Politechniki Wroclawskiej Wroclaw, Poland ISBN: 83-7085-721-3

## Description

### FIELD OF THE INVENTION

The present invention relates to Public Key infrastructures (PKI's). In particular, it relates to issuance and verification of digitally signed Certificates and systems and related aspects which facilitate such Certification. It has particular relevance to cross-certification between PKI systems.

### BACKGROUND TO THE INVENTION

A Public Key Infrastructure (PKI) is a system of technologies that support the establishment of electronic trust between relying parties. Based on the concept of Public Key Cryptography (PKC), the technology has so far proven to be a robust platform for secure communications including secure electronic commerce on the Internet and elsewhere, including banking networks.

Public Key Cryptography (PKC) is a technique that allows parties to communicate securely through the use of Public and Private key pairs. PKC-based communications can be both authentic and secret, even though the public keys are made widely known and available. The technique was first invented during the 1970s as an alternative to Symmetric Key Cryptography (SKC), which necessitated the shared keys be kept secret between the parties who wish to communicate.

For PKC to operate successfully on a large scale usually requires the establishment of a Public Key Infrastructure (PKI). At the core of a PKI is a trusted agent, commonly referred to as a Certification Authority (CA), which attests to the validity of the public keys of subscribers. It does so by signing these keys to form a data structure known as a (public key) certificate. The public keys can then be exchanged electronically and checked for integrity using the public key of the certifying CA, which must first be obtained by a trustworthy method.

A given Certification Authority may support a single application, or many applications for a complete enterprise, provided the enterprise is not too large. The certificates issued by such an enterprise CA are typically stored in a data repository such as the organisational directory, where they are accessed by the applications. Many enterprises - including parts of the automotive industry, the finance and banking sector, oil and defence - are now establishing organisational CAs. One notable large example is the United States Department of Defense which has rolled out an organisational PKI of around 10 million certificates.

In formal terms, two groups of users of a PKI can be defined as follows:
- A *Subscriber* is a user, server, or encryption device that possesses a private key and corresponding digital certificate issued by the CA, which it uses to send authenticated (signed) messages. A message could include digitally signed e-mail, or the message exchanges used in challenge-response authentication protocols.
- A *Relying Party (RP)* is an agent which verifies the authenticity of messages signed by subscribers, using certificates issued by the CA. It is described as a Relying Party because it relies on a CA to verify, on its behalf, the identity of subscribers sending digitally signed emails or interacting through message exchanges used in challenge-response authentication protocols. The CA certificate used to start trust path building is referred to as a Trust Anchor. A Trust Anchor is often, but not always, the root of a hierarchy.

Rather than a single CA serving all users for all applications in an enterprise, a hierarchy of CAs with a root and a number of subordinates can be established. A hierarchy allows certificate management functions to be distributed across the organisation, closer to the users. This brings benefits in terms of resilience and security. Resilience is increased because CAs can operate in close proximity to the users they are serving for certificate and revocation list publication. Security is increased because close proximity facilitates out-of-band communication between the PKI components and the user community.

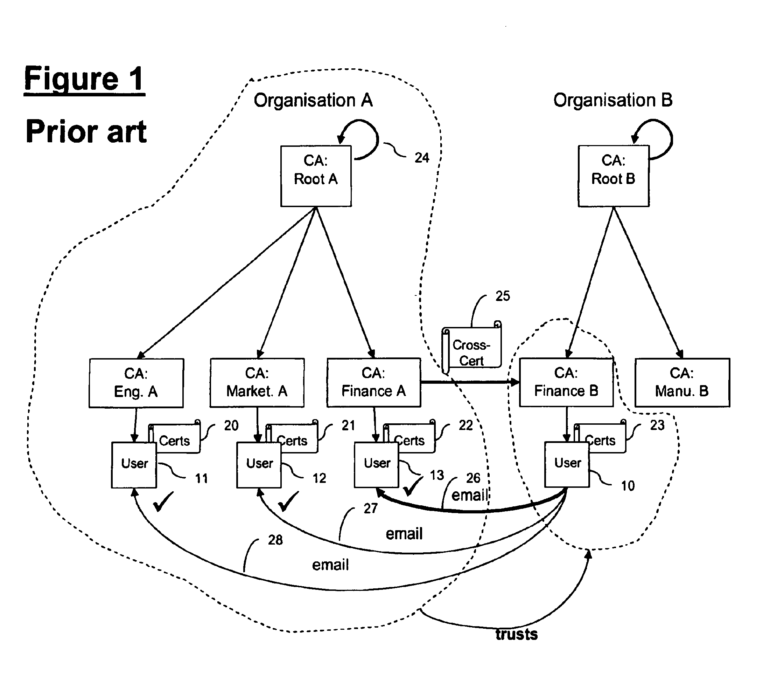

Referring now to Figure 1, trust always originates from the root in a strict hierarchy of CA's. This is denoted graphically by the looping arrow at the root of the hierarchy (Root A) denoting a self-signed (or self-issued) certificate.

An important point to note is that the root of the hierarchy is the shared trust anchor for all Relying Parties (RPs) within Organisation A. This is the defining characteristic of a Strict Hierarchy of CA's. The consequence is that all RPs determine trust in exactly the same way. This at first seems counter-intuitive, since it might initially (though wrongly) be assumed that the most local CA is the starting point for both sending and receiving secure communications. However, trust management in a strict hierarchy is asymmetric:
- For sending signed communications, the trust chain extends from the Root through the local CA to the subscriber's certificate.
- For receiving signed communications, trust again begins at the root, and will extend to each of the subordinate CAs (or elsewhere) as necessary. The local CA has no bearing on this process.

However a strict hierarchy suffers certain drawbacks:
- A Root CA is a critical single point of failure for an enterprise. If for any reason the Root CA of an enterprise goes out of service for a period of time, then certificate revocation information cannot be published, leading to potential denial of service right across the enterprise (including local domains). Even more seriously, if the root is permanently damaged or compromised, the whole enterprise must be rekeyed, which could be a potentially very time-consuming and costly process.
- A strict hierarchy often does not reflect real business requirements. For example, in a consortium, or a large company which owns a number of smaller ones, a more federated approach may be more appropriate.
- Certificate and key roll-over are very complex, since the lifetimes of certificates issued by a subordinate CA will not generally exceed that of the superior certificates.
- Unexpected trust issues can arise if a subordinate tries to cross-certify with an external partner. This is discussed further below.

There is often a requirement to communicate securely across organizational boundaries, which usually also involves crossing security administration boundaries (including PKI boundaries). Several techniques exist for extending trust of public keys, but the most prevalent of these in use today is cross-certification.

Peer-to-Peer Cross-Certification (referred to below simply as cross-certification) is a process supported by many vendors of PKI technology. Cross-certification allows two separate PKI systems to establish a trust relationship with one another. This trust relationship can be established with certain constraints or conditions imposed, so that each PKI does not need to unconditionally trust the partnering PKI system, but can instead trust it under controlled conditions.

Two organisations may cross-certify their individual PKI's at the root level. This approach is ideal if each organisation intends to trust the entire PKI of the other organisation. However, it is likely that one organisation may prefer to extend trust to another organisation only at the subordinate level, such as to enable trust only between selected departments. This need to localise trust in this way may arise for a variety of reasons: for example, certain departments may work in commercially sensitive areas and may wish to exclude trust to external parties, while a procurement department may have a more open policy and need to establish trust relationships with a large number of external suppliers.

It is known from the Microsoft™ documents entitled "Planning and implementing Cross-certification and Qualified Subordination Using Windows Server 2003" to employ known cross-certification methods to limit the scope of trust within an external (cross-certified) partner organisation. However any trust relationship established by issuance of a cross-certificate to the external (cross-certified) organisation is uniformly inherited by all relying parties in the cross-certifying organisation.

A problem with this approach, even when applied in the context of allowing subordinate CA's to cross-certify is that the resulting trust relationship is asymmetric: external entities can authenticate themselves organisation-wide, but only entities within the cross-certifying organisation at or under the cross-certifying CA can authenticate themselves to the external organisation. This asymmetry may result in certain communications protocols not operating correctly. Consequently it is not generally recommended to create trust relationships between subordinate CA's, preferring always to do so at root level to ensure such protocols operate correctly.

Patent US 6,192,130 B1 relates to an information security subscriber trust authority transfer system with private key history transfer; patent application US 2003/0130947 A1 relates to a method and system for computing digital certificate trust paths using transitive closures in a peer-to-peer cross-certification model.

It is therefore desirable to provide improved PKI systems, apparatus, methods, etc. which mitigate one or more problems associated with known systems.

### SUMMARY OF THE INVENTION

The present invention provides methods, apparatus, systems, and programs for computers (optionally on a machine readable medium) which constrain the issuance and/or use of certificates by PKI or similar systems, including those based on ITU Recommendation X.509 and related standards.

In particular, according to a first aspect of the present invention there is provided a Public Key Infrastructure comprising a hierarchy of certification authorities in which a first certification authority is arranged to issue a cross-certificate and in which a second certification authority, hierarchically superior to the first is arranged so as to issue only certificates which neither alone nor in combination can be used successfully to validate the cross-certificate.

Whilst the second certification authority can indeed issue trust anchors and other certificates, it must ensure that none of them, either singly or in combination, allow successful validation of cross-certificates issued by the first.

In some embodiments the certificates comprise a trust anchor.

In some embodiments each certification authority hierarchically superior to the first is arranged so as to issue only certificates which neither alone nor in combination can be used successfully to validate the cross-certificate.

In some embodiments the second certification authority issues to its subordinate certification authorities certificates comprising a constraint which precludes their use in successfully validating the cross-certificate.

In some embodiments the constraint comprises one of a path length constraint, a name space constraint, a policy mapping constraint and an application constraint.

In some embodiments the constraint comprises a policy mapping constraint.

In some embodiments the constraint bans policy mapping.

In some embodiments the trust anchor comprises an inhibitPolicyMapping field and in which the constraint comprises setting the inhibitPolicyMapping field to a predetermined value.

In some preferred embodiments the predetermined value of the inhibitPolicyMapping field is zero.

The Public Key Infrastructure may be operated substantially in accordance with ITU Recommendation X.509.

In this context there are already a number of derivatives of the basic X.509 recommendation and these will inevitably evolve over time. It will readily be understood by those skilled in the art, therefore, that the invention applies equally those derivatives as to the literal wording of X.509 itself, hence the application infrastructures substantially, rather than literally, in accordance with X.509.

According to a further aspect of the present invention there is provided a certification authority for a Public Key Infrastructure comprising a hierarchy of certification authorities in which a first certification authority is arranged to issue a cross-certificate, the certification authority being configured to be hierarchically superior to the first certification authority and arranged so as to issue only certificates which neither alone nor in combination can be used successfully to validate the cross-certificate.

The invention is also directed to methods by which the infrastructures operate and comprising method steps corresponding to each relevant component piece of equipment.

In particular, according to a further aspect of the present invention there is provided a method of operating a Public Key Infrastructure comprising the steps of: providing a Public Key Infrastructure comprising a hierarchy of certification authorities the hierarchy comprising a first certification authority and a second certification authority hierarchically superior to the first; configuring the first certification authority to issue cross-certificates; configuring the second certification authority to issue certificates, none of which either alone or in combination allow successful validation of cross-certificates issued by the first certification authority.

The invention is also directed to programs for computers (whether as software, firmware, chip layout software, or source code or object code optionally on a machine readable carrier or medium) for performing the methods of the invention; and the invention is also directed to computers programmed by means of such programs, which also form apparatus in the sense of other aspects of the invention.

In particular, according to a further aspect of the present invention there is provided a program for a computer having component code portions configured to operate as a certification authority in a Public Key Infrastructure comprising a hierarchy of certification authorities in which a first certification authority is arranged to issue a cross-certificate, the certification authority being configured to be hierarchically superior to the first certification authority and arranged so as to issue only certificates which neither alone nor in combination can be used successfully to validate the cross-certificate.

According to a further aspect of the present invention there is provided a Public Key Infrastructure comprising a certification authority configured to issue a subordinate certificate or trust anchor comprising a constraint which prevents the subordinate certificate or trust anchor respectively, in normal operation, being used to validate cross-certificates issued by a subordinate certification authority.

According to a further aspect of the present invention there is provided a Public Key Infrastructure comprising a certificate validation function arranged to validate cross-certificates responsive to a constraint in a subordinate certificate or trust anchor comprising a constraint which prevents the subordinate certificate or trust anchor respectively, in normal operation, being used to validate cross-certificates issued by a subordinate certification authority.

The preferred features may be combined as appropriate, as would be apparent to a skilled person, and may be combined with any of the aspects of the invention. Other advantages of the invention, beyond the examples indicated above, will also be apparent to the person skilled in the art.

### BRIEF DESCRIPTION OF THE DRAWINGS

In order to show how the invention may be carried into effect, embodiments of the invention are now described below by way of example only and with reference to the accompanying figures in which:
Figure 1 shows a first prior art PKI system;
Figure 2 shows a first PKI system in accordance with the present invention;
Figure 3 shows a second PKI system in accordance with the present invention.

### DETAILED DESCRIPTION OF THE INVENTION

Referring now to Figure 1, one possible approach to controlling the extent of cross-certification is to perform the cross-certification at a subordinate, departmental level. This illustrates a trust relationship between two subordinate level CA's: Finance A and Finance B. Clearly, the intention here would be to confine the trust relationship to the Finance departments of the two organisations. In seeking to meet this requirement, the previously known approach used when cross-certifying at Root CA level is to use the well-known technique of certificate constraints. Unfortunately this is inadequate when cross-certifying at subordinate CA level, as explained below.

The X.509 standard allows for the use of certificate constraints (as defined in *"RFC 2459* - *Internet X.509 Public Key Infrastructure Certificate and CRL Profile"* (http://www.fags.org/rfcs/rfc2459.html) for example). Such constraints may include name space, policy mapping, path length, or application policy constraints. Such constraints are placed in the cross-certificates, and have the effect of limiting the extent to which trust extends into the partner organisation. By way of illustration, and referring again to Figure 1, constraints could be used by CA Finance A in the following manner:
- Path length constraints could be used to prevent trust extending to any other CA's with which Finance B has cross-certified. Setting the path length to zero in a cross-certificate issued by Finance A, for example, will ensure that trust will not extend to any other CA's beyond Finance B.
- Name space constraints in the cross-certificate issued by Finance A to Finance B could be used to prevent trust extending to certificates outside the permitted name space: in this example, a cross certificate might only allow for name spaces of the form "xxx.Organisation-B.com" which would limit use of the certificate to within any entity "xxx" within Organisation B (in this case "xxx" might be the name space associated Finance B).
- Policy mapping constraints in the cross-certificate issued by Finance A could be used to prevent trust extending to CA's which are not using one of the allowed policy types.
- Application policy constraints in the cross-certificate issued by Finance A could be used to restrict secure communications to a defined set of applications.

RFC 2459 contains a detailed description of the different types of certificate constraints, their syntax, and how they may be used.

An important point to appreciate about constraints is that whilst they do apply to subscribers 10 within the cross-certified organisation (Organisation B in the present example), they do not apply selectively to relying parties 11-13 within the cross-certifying organisation (Organisation A). Rather, any constraints contained in certificates apply globally to all the relying parties that begin building trust with a particular trust anchor. In the present example therefore, all parties in Organisation A whether inside or outside of the Finance department will treat the cross-certificates in the same way.

Each subscriber or relying party holds, or has access to, a set of certificates 20-23. Though shown as if each user holds the certificates locally, the certificates may instead be held in a commonly accessible repository within each organisation.

The present inventors have however identified that an undesirable consequence of this arrangement is that trust paths can arise unexpectedly in a cross-certified organisation and have confirmed the existence of those unexpected trust paths empirically.

Referring still to Figure 1, a subscriber 10 from Organisation B's Finance Department sends a signed email to a user 12 from Organisation A's Marketing Department. Even though the cross-certification has been implemented between the two Finance CA's, a chain of trust nevertheless exists from Root A to the sending user's certificate. The recipient user's Trust Anchor 24 is issued by Root A and, because the cross-certificate 25 created by the Finance CA is distributed freely within Organisation A's Directory, the recipient's e-mail application will process the signed e-mail in exactly the same way, adhering to the same constraints imposed by the cross-certification established by Finance A.

The existence of such unintended and hence unexpected trust paths will be referred to as "unexpected trust". Unexpected trust has the potential to have a significant and in some cases serious impact on an organisation. It means that users in Organisation B may, for example, be able to send signed e-mail 26-28 anywhere into organisation A and have it accepted. They may also connect securely to web servers or file servers, or log on to systems remotely, etc.

It may be possible to put in place measures that mitigate the effect of this problem. These could include locking down firewalls at organizational boundaries to only allow certain applications, or constraining applications to check additional aspects of certificate paths, such as name constraints or maximum path length from the trust anchor. However, these will only partially address the problem, and result in additional complexity. If an organisation has faulty registration procedures, then there is the strong possibility that a person with mal-intent could masquerade as another user in a partner organisation, circumventing any name constraints used by applications.

Having identified the presence of unexpected trust in systems cross-certifying at subordinate CA level in the simple fashion described above, the present inventors have gone on to develop an enhanced PKI arrangement using a hierarchy of CAs configured in a particular way. In summary the Root CA supports trust inside the organisation and subordinate CAs also act as points of trust for local users in what may be referred to as a multi-rooted hierarchy. Subordinate CAs may also cross-certify with partners to support local business requirements. However, constraints from the Root CA prevent this trust from being propagated to other unwanted part of the organisation, thereby avoiding the problem of unexpected trust.

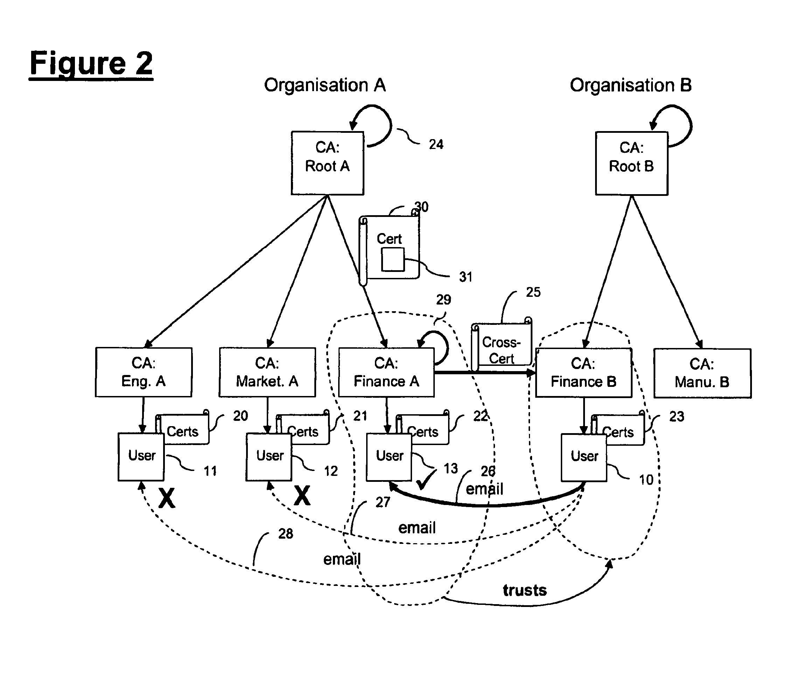

Referring now to Figure 2, a revised Certification Authority structure for Organisation A comprises a self-certifying CA, Root A, as previously and subordinate CAs Engineering A, Marketing A and Finance A corresponding organisationally to Engineering, Marketing and Finance Departments respectively. In this case however the Finance A CA is also self-certifying 29, forming a trust anchor for users of subordinate CAs. The organisational structure of organisation B is as previously described, since the precise structure is not important.

In this case, in addition to Root A issuing trust anchors to relying users 11-13 dependent upon either itself or its subordinate CAs, Finance A also issues trust anchors to its own relying users 13, though not to subordinate users 11-12 dependent from other peer CA's (e.g. Marketing A).

However in addition to Finance A being capable of issuing its own trust anchors, the superior Root A CA imposes a constraint 31 on the certificates which can be validated when starting at this point. In particular these certificates are restricted to prevent their use in validating a cross certificate issued by subordinate CA Finance A. This can be achieved in a number of ways but may be most easily and effectively achieved by setting the inhibitPolicyMapping field of certificates issued to subordinates to zero. This means that whilst certificates 30 issued by Root A may be used to validate certificates issued within organisation A, they cannot be used to validate cross-certificates 25 issued by subordinate CA's to other organisatioris.

In the case where Finance A issues a cross-certificate 25 to Finance B who in turn certifies a Finance B subscriber 10, this certificate chain may in return be presented to a Finance A relying user 13 for validation. In this case, the certificate is identifiable as a cross-certificate, by a simple mechanism such as providing and checking a policy mappings field within the certificate. Whilst the Finance A relying user may hold a trust anchor from Root A, inhibition of policy mapping in the certificate issued by Root A to paths of length zero means that the Root A certificate cannot be used successfully to validate the cross-certificate. However the Finance A relying user also holds a trust anchor 29 from Finance A which can be used successfully to validate the cross certificate, thereby allowing the required interaction to proceed.

In contrast, if the Finance B subscriber 10 presents the same certificate chain including the cross-certificate 25 to a relying user 11-12 in part of Organisation A which does not hold a trust anchor from Finance A then validation will fail. For example, were the Finance B subscriber to present its certificate to a Marketing A relying user 12, any attempt to validate the certificate using the trust anchor 24 from Root A will fail since that trust anchor may not be used for validating cross-certificates issued more than zero steps from the issuing Root A CA. This is achieved through the use of the aforementioned constraints. Moreover, since the Marketing A Relying user 12 is not dependent on Finance A, it does not hold a trust anchor from Finance A which would be the only other way of validating the cross-certificate issued by Finance A. Consequently the Marketing A relying user cannot validate the cross-certificate presented by the Finance B subscriber and hence the requested interaction will be refused. A similar situation arises if the cross-certificate were presented to an Engineering A relying user, and so Unexpected Trust as described above is thereby prevented.

The present inventors have realised then that a multi-rooted hierarchy together with constraints on the issuance of certificate provides improved means of controlling trust outside an enterprise.

Constraints are placed on the certificates issued to subordinate CA's by the root. These prevent trust from being extended outside of an organisation in which trust can begin at the root. Constraints can include any of those listed previously - name space, policy mapping, path length and application policy. One example is for the root to issue subordinate CAs certificates with an *'inhibitPolicyMapping'* constraint. This prevents relying parties from building trust paths from the root using certificates that have a policy mapping field within them.

Where a subordinate CA may wish to issue a cross certificate, and that certificate contains a policy mapping, this mapping will override the constraint from the root, but will only apply to relying parties who begin path building other than from the root. In our current case of a multi-rooted hierarchy, this is the local subscribers 13 of the subordinate CA.

The users in this scenario hold two Trust Anchors:
- **A departmental/local CA** (i.e. the self signed subordinate CA) which can implement its own policy, and which will apply only to those that hold the local CA certificate as a Trust Anchor.
- **A Root CA,** through which local users will be able to trust other parts of their own organisation. The Root CA will implement a global policy whose effect is to prohibit trust being built to cross certified CAs.

The result is that the users trust other parts of their own organisation through the certificates issued from the Root CA to the subordinate CAs. By virtue of the fact that the certificates are constrained, trust from a local CA does not propagate through to the rest of the organisation.

Adopting this technique, and referring still to Figure 2, the resulting trust relationships are summarised in Table 1 hold.

**Table 1: Trust Relationships**

| *Users from this department ...→* | **Finance A users** | **Organisation B users** | **Marketing A users & Engineering A users** |
|---|---|---|---|
| ... *trust*/*do not trust users from this department:* ↓ | | | |
| **Finance A users** | **✔** -- via Root A and Finance A Trust Anchors | **✔** -- via Cross-Certificate | **✔** -- via Root A Trust Anchor |
| **Organisation B users** | **✔** -- via Cross-Certificate | **✔** -- via Root A Trust Anchor | **X** -- no trust path exists (constraint from the Root A overrides cross-certificate |
| **Marketing A & Engineering A users** | **✔** -- via Root A Trust Anchor | **X** -- no trust path exists | **✔** via Root A & Marketing A or Eng. A Trust Anchors |

By inspection of the table, it can be seen that the desired trust requirement has been fully met:
- The Finance A users, in the left-hand column, trust everyone.
- External (organization B) users, in the middle column, only trust the Finance users, plus their own organizational users. They do not trust either Marketing A or Engineering A users, since no valid certificate path exists between the parties.
- Marketing A or Engineering A users, in the right-hand column, trust Finance A users, plus their own local users. They do not trust the external CA users, since policy constraints from the root make the path an illegal one from the point of view of relying applications.

A simple and effective constraint which can be used for this purpose is to set the *"inhibitPolicyMapping"* (as described in RFC 2459) property to zero, and so disallowing policy mapping and thereby prohibit cross-certification. This allows for an organisational PKI to be as deep as required. Whilst name constraints may alternatively be used, their use relies on the correct implementation and operation of registration in the external partnering organization whereas use of the policy mapping constraint retains full control of trust propagation in the hands of the organisation issuing the cross-certificate. Use of the policy mapping constraint is also better than path length constraints that would otherwise inhibit the depths of the local organisational CA.

With this approach, it may appear that there is an apparent contradiction between, on the one hand, the Root (or other hierarchically superior) CA banning policy mappings for its subordinates, and on the other, a subordinate CA actually issuing certificates which contain policy mappings. The proposed scheme might therefore be objected to on these policy grounds. However it is further observed that it is not the Root CA of the hierarchy that defines the organisation's policies, but rather it is merely responsible for implementing some portions of them according to organizational policy. Consequently an organisation's PKI policy may choose to designate a Root (or other hierarchically superior) CA as being responsible only for certain aspects of its secure communications, such as internal communications only. Subordinate CAs may then be permitted, by the policy, to take responsibility for other aspects of the organisation's secure communications requirements, such as cross-certification, provided that the subordinates implement the necessary constraints required in association with issuance of cross-certificates. Both Root CAs and subordinate CAs are therefore operating in accordance with organisational PKI policy.

Whilst in known PKI's based on Recommendation X.509 the constraints may be implemented in certificates issued from superior CA's to inferior CA's it has also be identified that the constraints could also be embedded within the trust anchor's issued by self-certifying CA's. in that embodiment the constraint need only be included by the CA, in its trust anchor, whereas in other embodiments it must be included in each certificate issued by the superior CA to each of its subordinates. The single point implementation of including the constraint in the trust anchor may be achieved by a simple modification of the trust anchor data structure along with corresponding modifications of the systems (typically implemented via programs for computers) which read and interpret those data structures.

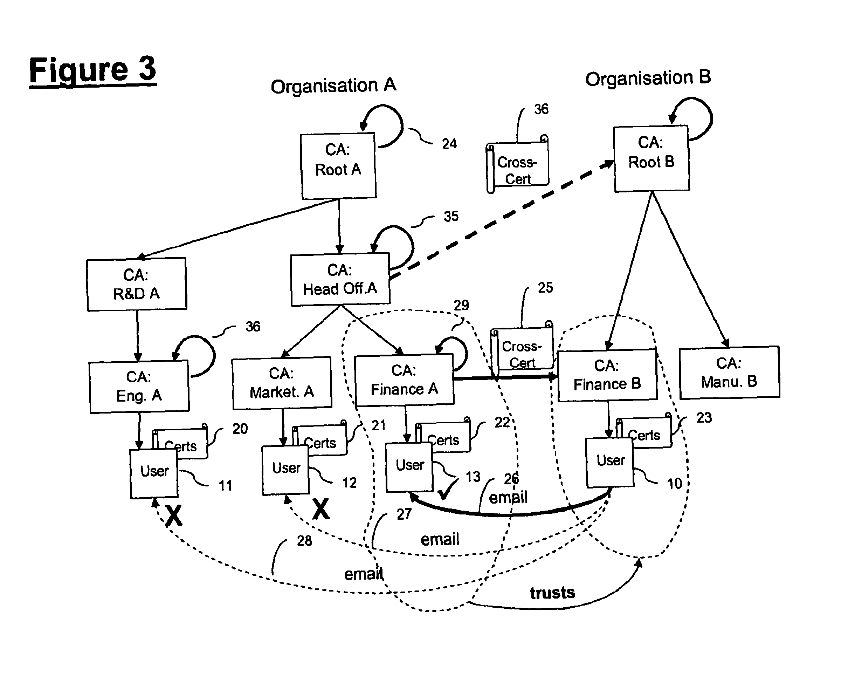

Although the arrangement is described above in terms of a two-level hierarchy of CA's it will be apparent to those skilled in the art that the arrangement may readily be generalised to hierarchies of more than two levels. In particular, and referring now to Figure 3, a multilevel hierarchy may comprise three or more levels of CA's. In this instance the overall arrangement is similar to that of Figure 2 except insofar as an additional level is interposed between the Root A CA and the Engineering A, Marketing A, and Finance A CA's. Specifically, the Engineering CA is made subordinate to an R&D A CA, and both the Marketing A and the Finance A CA's made subordinate to a Head Office A CA. CA's in any or all of the levels may be arranged 35-36 to issue trust anchors, and in the example shown certification authorities Head Office A and the Engineering A are shown as capable of doing so, though not the certification authority R&D A.

As before, self-certifying CA's may issue cross-certificates. However the nature of the constraint imposed within trust anchors issued by CA's which are hierarchically superior to those issuing a given cross-certificate are more complex than in the preceding example. In general then it is necessary to ensure that no trust anchor issued by a CA hierarchically superior to the issuer of a given cross-certificate can be used successfully to validate the issued cross-certificate. To achieve that, a simple method is to limit the validation path length from issued trust anchors, either by the use of the path length constraint of the certificate or the 'skip certs' subfield of the inhibit policy mappings constraint. So in the example shown, if it is desired to prevent unexpected trust from arising in respect of cross-certificates 25 issued by the lowest level CA's (i.e. Engineering A, Marketing A, and Finance A) then the Root A CA sets inhibitPolicyMapping to a value no greater than 1, whilst the Head Office A CA sets inhibitPolicyMapping to a value no greater than zero. In this way neither the trust anchor 24 from Root A nor that 25 from Head Office A can be successfully employed to validate a cross-certificate 25 issued by Engineering A, Marketing A, or Finance A. (Note that in existing X.509 based systems it will be necessary that cross-certificates always have a policy mappings field in them for this specific embodiment to work.)

Note however that were Head Office A to issue cross-certificates 36 in a situation in which Root A had set inhibitPolicyMapping to 1 (rather than zero), unexpected trust could still arise as a result of validating the cross-certificate 36 issued by Head Office A by using the trust anchor of Root A. Consequently if that too is to be prevented, the Root A trust anchor must also limit its path length to zero (or in general to a length which prevents its use in validating any cross-certificate issued by any subordinate CA). This may be achieved by setting inhibitPolicyMapping again to zero as before.

Conversely if the constraint applied by Root A is to set inhibitPolicyMapping to zero, but no corresponding constraint is applied to trust anchors issued by Head Office A, then cross-certificates issued by any CA subordinate to Head Office A will effectively extend trust across all of Head Office A's relying users 12-13. The ability selectively to constrain trust anchors in this way therefore allows creation of complex trust structures.

Although only shown with respect to one of the two interacting organisations, it will be apparent that the proposed configuration may be applied to each of many interacting organisations in order that each of them inhibits unexpected trust to a chosen degree within their respective organisations.

Referring still to Figure 3, the local CA (e.g. Finance A) forms an additional trust anchor for subscribers 13 of that CA. So each user has several trust anchors from which it may verify certificate chains: in the example above, users have one from the Root, and another from the local CA, and some 12-13 a further trust anchor from Head Office A. The additional trust anchors from the subordinate CA's allow local communication to continue even if the enterprise root goes out of service for any reason.

A multi-rooted hierarchy (that is one in which subordinate CA's can issue trust anchors) overcomes many of the problems of a strict hierarchy listed above. It removes the problem of the Root CA being a single point of failure for the enterprise. It also simplifies certificate and key lifetime management, since the local CA's keys and certificates can be decoupled from that of the root. In general, therefore, the multi-rooted approach is to be preferred over the strict hierarchy for many situations.

In summary then, and still referring to Figure 3, a means is provided to limit the propagation of trust within a certificate-issuing organisation. The scope of trust is limited by locating, between a first hierarchically superior CA (Root CA) and a second cross-certificate issuing CA (Finance A), a third CA (Head Off. A) which has its own trust anchor 35 capable of validating cross-certificates 25 issued by the second cross-certificate issuing CA. By the inclusion of a suitable constraint in certificates issued by the first hierarchically superior CA (Root CA), the cross-certificates 25 issued by the second CA (Finance A) can only be validated at or hierarchically below the third CA (Head Off. A). This limits the scope of the trust relationship within the certificate-issuing organisation (Organisation A) as a whole to those organisational units at or below the third CA (Head Off. A). It will also be apparent from the foregoing description that the third CA and the second CA may in some cases be one and the same CA (for example Finance A), whereby trust in the issuing organisation is limited to propagate only within the cross-certificate issuing organisational unit (Finance A).

So whereas in known systems the extent of trust in the external organisation (Organisation B) may be limited to a subset of that organisation's structure by means of constraints applied to cross-certificates issued to the external organisation, the present invention permits the scope of trust within the issuing organisation (Organisation A) to be correspondingly constrained. This allows trust to be both established between and restricted to subsets of the cross-certifying and the cross-certified organisations.

Any range or device value given herein may be extended or altered without losing the effect sought, as will be apparent to the skilled person for an understanding of the teachings herein.

## Claims

1. A Public Key Infrastructure comprising a hierarchy of certification authorities in which a first certification authority is arranged to issue a cross-certificate (25) to a peer Public Key Infrastructure and **characterised in that** a second certification authority, hierarchically superior to the first is arranged so as to issue only certificates (30) which neither alone nor in combination can be used successfully to validate the cross-certificate.

2. A Public Key Infrastructure according to any preceding claim in which the certificates comprise a trust anchor.

3. A Public Key Infrastructure according to any preceding claim in which each certification authority hierarchically superior to the first is arranged so as to issue only certificates which neither alone nor in combination can be used successfully to validate the cross-certificate.

4. A Public Key Infrastructure according to any preceding claim in which the second certification authority issues to its subordinate certification authorities certificates comprising a constraint which precludes their use in successfully validating the cross-certificate.

5. A Public Key Infrastructure according to claim 4 in which the constraint comprises one of a path length constraint, a name space constraint, a policy mapping constraint and an application constraint.

6. A Public Key Infrastructure according to any preceding claim in which the constraint comprises a policy mapping constraint.

7. A Public Key Infrastructure according to any preceding claim in which the constraint bans policy mapping.

8. A Public Key Infrastructure according to any preceding claim in which the trust anchor comprises an inhibitPolicyMapping field and in which the constraint comprises setting the inhibitPolicyMapping field to a predetermined value.

9. A Public Key Infrastructure according to claim 8 in which the predetermined value is zero.

10. A Public Key Infrastructure according to any preceding claim operated substantially in accordance with ITU Recommendation X.509.

11. A certification authority for a Public Key Infrastructure comprising a hierarchy of certification authorities in which a first certification authority is arranged to issue a cross-certificate (25) to a peer Public Key Infrastructure, the certification authority being configured to be hierarchically superior to the first certification authority and **characterised in that** the certification authority is arranged so as to issue only certificates (30) which neither alone nor in combination can be used successfully to validate the cross-certificate.

12. A method of operating a Public Key Infrastructure comprising the steps of:
providing a Public Key Infrastructure comprising a hierarchy of certification authorities the hierarchy comprising a first certification authority and a second certification authority hierarchically superior to the first;
configuring the first certification authority to issue a cross-certificate (25) to a peer Public Key Infrastructure;
**characterised in that** it further comprises the step of configuring the second certification authority to issue certificates (30), none of which either alone or in combination allow successful validation of cross-certificates issued by the first certification authority.

13. A program for a computer having component code portions configured to operate as a certification authority in a Public Key Infrastructure comprising a hierarchy of certification authorities in which a first certification authority is arranged to issue a cross-certificate (25) to a peer Public Key Infrastructure, the certification authority being configured to be hierarchically superior to the first certification authority and **characterised in that** the second certification authority is arranged so as to issue only certificates (30) which neither alone nor in combination can be used successfully to validate the cross-certificate.

14. A Public Key Infrastructure according to any one of claims 1-10 in which the second certification authority may also issue cross-certificates to a peer Public Key Infrastructure.

## Patentansprüche

1. Infrastruktur für öffentliche Schlüssel, die eine Hierarchie von Zertifizierungsstellen umfasst, in der eine erste Zertifizierungsstelle so ausgebildet ist, dass sie ein Kreuzzertifikat (25) an eine gleichrangige Infrastruktur für öffentliche Schlüssel ausgibt, und die **dadurch gekennzeichnet ist, dass** eine zweite Zertifizierungsstelle, die hierarchisch über der ersten Zertifizierungsstelle steht, so ausgebildet ist, dass sie lediglich Zertifikate (30) ausgibt, die weder allein noch in Kombination erfolgreich zur Validierung des Kreuzzertifikats verwendet werden können.

2. Infrastruktur für öffentliche Schlüssel nach dem vorhergehenden Anspruch, bei der die Zertifikate einen Vertrauensanker umfassen.

3. Infrastruktur für öffentliche Schlüssel nach einem der vorhergehenden Ansprüche, bei der jede Zertifizierungsstelle, die hierarchisch über der ersten Zertifizierungsstelle steht, so ausgebildet ist, dass sie lediglich Zertifikate ausgibt, die weder allein noch in Kombination erfolgreich zur Validierung des Kreuzzertifikats verwendet werden können.

4. Infrastruktur für öffentliche Schlüssel nach einem der vorhergehenden Ansprüche, bei der die zweite Zertifizierungsstelle an ihre ihr untergeordneten Zertifizierungsstellen Zertifikate ausgibt, die eine Einschränkung enthalten, die ihre Verwendung zur erfolgreichen Validierung des Kreuzzertifikats unmöglich macht.

5. Infrastruktur für öffentliche Schlüssel nach Anspruch 4, bei der die Einschränkung eine Weglängen-Einschränkung, eine Namensraum-Einschränkung, eine Policy-Mapping-Einschränkung oder eine Anwendungs-Einschränkung ist.

6. Infrastruktur für öffentliche Schlüssel nach einem der vorhergehenden Ansprüche, bei der die Einschränkung eine Policy-Mapping-Einschränkung ist.

7. Infrastruktur für öffentliche Schlüssel nach einem der vorhergehenden Ansprüche, bei der die Einschränkung Policy-Mapping verbietet.

8. Infrastruktur für öffentliche Schlüssel nach einem der vorhergehenden Ansprüche, bei welcher der Vertrauensanker ein inhibitPolicyMapping-Feld aufweist und bei der die Einschränkung das Setzen des inhibitPolicyMapping-Feldes auf einen vorgegebenen Wert umfasst.

9. Infrastruktur für öffentliche Schlüssel nach Anspruch 8, bei welcher der vorgegebene Wert Null ist.

10. Infrastruktur für öffentliche Schlüssel nach einem der vorhergehenden Ansprüche, die im Wesentlichen nach der ITU-Empfehlung X.509 betrieben wird.

11. Zertifizierungsstelle für eine Infrastruktur für öffentliche Schlüssel, die eine Hierarchie von Zertifizierungsstellen umfasst, in der eine erste Zertifizierungsstelle so ausgebildet ist, dass sie ein Kreuzzertifikat (25) an eine gleichrangige Infrastruktur für öffentliche Schlüssel ausgibt, wobei die Zertifizierungsstelle so konfiguriert ist, dass sie hierarchisch über der ersten Zertifizierungsstelle steht, und **dadurch gekennzeichnet ist, dass** die Zertifizierungsstelle lediglich Zertifikate (30) ausgibt, die weder allein noch in Kombination erfolgreich zur Validierung des Kreuzzertifikats verwendet werden können.

12. Verfahren zum Betreiben einer Infrastruktur für öffentliche Schlüssel, das folgende Schritte umfasst:
Vorsehen einer Infrastruktur für öffentliche Schlüssel, die eine Hierarchie von Zertifizierungsstellen umfasst, wobei die Hierarchie eine erste Zertifizierungsstelle und eine zweite Zertifizierungsstelle, die hierarchisch über der ersten Zertifizierungsstelle steht, umfasst,
Konfigurieren der ersten Zertifizierungsstelle in der Weise, dass sie ein Kreuzzertifikat (25) an eine gleichrangige Infrastruktur für öffentliche Schlüssel ausgibt,
**dadurch gekennzeichnet, dass** es ferner den Schritt des Konfigurierens der zweiten Zertifizierungsstelle in der Weise umfasst, dass sie Zertifikate (30) ausgibt, die sämtlich weder allein noch in Kombination zur erfolgreichen Validierung des Kreuzzertifikats verwendet werden können.

13. Programm für einen Computer mit Komponentencode-Abschnitten, die zum Betrieb als Zertifizierungsstelle in einer Infrastruktur für öffentliche Schlüssel konfiguriert sind, die eine Hierarchie von Zertifizierungsstellen umfasst, in der eine erste Zertifizierungsstelle so ausgebildet ist, dass sie ein Kreuzzertifikat (25) an eine gleichrangige Infrastruktur für öffentliche Schlüssel ausgibt, wobei die Zertifizierungsstelle so konfiguriert ist, dass sie hierarchisch über der ersten Zertifizierungsstelle steht, und **dadurch gekennzeichnet ist, dass** die zweite Zertifizierungsstelle so ausgebildet ist, dass sie lediglich Zertifikate (30) ausgibt, die weder allein noch in Kombination erfolgreich zur Validierung des Kreuzzertifikats verwendet werden können.

14. Infrastruktur für öffentliche Schlüssel nach einem der Ansprüche 1 bis 10, bei der die zweite Zertifizierungsstelle ebenfalls Kreuzzertifikate an eine gleichrangige Infrastruktur für öffentliche Schlüssel ausgeben kann.

## Revendications

1. Infrastructure à clés publiques comprenant une hiérarchie d'autorités de certification dans laquelle une première autorité de certification est agencée pour délivrer un certificat croisé (25) à une infrastructure à clés publiques homologue et **caractérisée en ce qu'**une deuxième autorité de certification, hiérarchiquement supérieure à la première, est agencée de manière à délivrer seulement des certificats (30) qui ne peuvent pas être utilisés avec succès, ni individuellement ni en combinaison, pour valider le certificat croisé.

2. Infrastructure à clés publiques selon une quelconque revendication précédente, dans laquelle les certificats comprennent un marqueur de confiance.

3. Infrastructure à clés publiques selon une quelconque revendication précédente, dans laquelle chaque autorité de certification hiérarchiquement supérieure à la première est agencée de manière à délivrer seulement des certificats qui ne peuvent pas être utilisés avec succès, ni individuellement ni en combinaison, pour valider le certificat croisé.

4. Infrastructure à clés publiques selon l'une quelconque des revendications précédentes, dans laquelle la deuxième autorité de certification émet à ses autorités de certification subordonnées des certificats comprenant une contrainte qui interdit leur utilisation pour la validation avec succès du certificat croisé.

5. Infrastructure à clés publiques selon la revendication 4, dans laquelle la contrainte comprend une contrainte choisie parmi une contrainte de longueur de parcours, une contrainte d'espace de nom, une contrainte de configuration de politique et une contrainte d'application.

6. Infrastructure à clés publiques selon l'une quelconque des revendications précédentes, dans laquelle la contrainte comprend une contrainte de configuration de politique.

7. Infrastructure à clés publiques selon l'une quelconque des revendications précédentes, dans laquelle la contrainte interdit la configuration de politique.

8. Infrastructure à clés publiques selon l'une quelconque des revendications précédentes, dans laquelle le marqueur de confiance comprend un champ d'invalidation de configuration de politique et dans laquelle la contrainte comprend le réglage du champ d'invalidation de configuration de politique à une valeur prédéterminée.

9. Infrastructure à clés publiques selon la revendication 8, dans laquelle la valeur prédéterminée est zéro.

10. Infrastructure à clés publiques selon l'une quelconque des revendications précédentes, exploitée sensiblement conformément à la Recommandation X.509 ITU.

11. Autorité de certification pour une infrastructure à clés publiques comprenant une hiérarchie d'autorités de certification dans laquelle une première autorité de certification est agencée pour délivrer un certificat croisé (25) à une infrastructure à clés publiques homologue, l'autorité de certification étant configurée pour être hiérarchiquement supérieure à la première autorité de certification et **caractérisée en ce que** l'autorité de certification est agencée de manière à délivrer seulement des certificats (30) qui ne peuvent pas être utilisés avec succès, ni individuellement ni en combinaison, pour valider le certificat croisé.

12. Procédé de fonctionnement d'une infrastructure à clés publiques comprenant les étapes suivantes :
la fourniture d'une infrastructure à clés publiques comprenant une hiérarchie d'autorités de certification, la hiérarchie comprenant une première autorité de certification et une deuxième autorité de certification hiérarchiquement supérieure à la première ;
la configuration de la première autorité de certification pour délivrer un certificat croisé (25) à une infrastructure à clés publiques homologue ;
**caractérisé en ce qu'**il comprend en outre l'étape de configuration de la deuxième autorité de certification pour délivrer des certificats (30), aucun desquels ne permet, ni individuellement ni en combinaison, une validation avec succès de certificats croisés délivrés par la première autorité de certification.

13. Programme pour un ordinateur ayant des portions de code constituantes configurées pour opérer comme une autorité de certification dans une infrastructure à clés publiques comprenant une hiérarchie d'autorités de certification dans laquelle une première autorité de certification est agencée pour délivrer un certificat croisé (25) à une infrastructure à clés publiques homologue, l'autorité de certification étant configurée pour être hiérarchiquement supérieure à la première autorité de certification et **caractérisé en ce que** la deuxième autorité de certification est agencée de manière à délivrer seulement des certificats (30) qui ne peuvent pas être utilisés avec succès, ni individuellement ni en combinaison, pour valider le certificat croisé.

14. Infrastructure à clés publiques selon l'une quelconque des revendications 1 à 10, dans laquelle la deuxième autorité de certification peut également délivrer des certificats croisés à une infrastructure à clés publiques homologue.
